# EUROPEAN PATENT SPECIFICATION

(11) **EP 4 520 642 B1**
(45) Date of publication and mention of the grant of the patent: **11.03.2026**
(21) Application number: 24164127.3
(22) Date of filing: 18.03.2024
(51) Int. Cl.: B62K 5/10, B62K 5/08, B62K 5/027, B62K 5/05, B62K 21/00, B62M 23/02, B62J 45/412, B62J 45/415, B62J 27/00, B62J 50/22, B62D 9/02, B60W 30/04, B60W 30/045, B60W 30/18, B60W 50/14, B60W 50/16

(54) **LEANING VEHICLE**
NEIGEFAHRZEUG
VÉHICULE INCLINABLE

(30) Priority: 06.09.2023 JP 2023144717
(43) Date of publication of application: 12.03.2025
(73) Proprietor: Yamaha Hatsudoki Kabushiki Kaisha, Iwata-shi, Shizuoka 438-8501 (JP)
(72) Inventor: Kasai, Satoshi, Iwata-shi, Shizuoka-ken, 438-8501 (JP); Imari, Sadanobu, Iwata-shi, Shizuoka-ken, 438-8501 (JP); Murase, Hisashi, Iwata-shi, Shizuoka-ken, 438-8501 (JP); Umetani, Toshiaki, Iwata-shi, Shizuoka-ken, 438-8501 (JP)
(74) Representative: Grünecker Patent- und Rechtsanwälte PartG mbB

(56) References cited:
- WO-A1-2017/090666
- FR-A1- 3 116 261
- JP-A- 2022 098 037
- US-A1- 2020 283 091

## Description

The present invention relates to a leaning vehicle according to the preamble of independent claim 1. Such a leaning vehicle can be taken from the prior art document WO 2017/090666 A1.

As described in JP 2023-51631 A, for example, a leaning vehicle has been known in the art that includes a left front wheel and a right front wheel, wherein the vehicle body frame tilts when turning left and right. The rider turns the leaning vehicle by steering the handle bar when turning left or right.

With a leaning vehicle, it is possible to enable a variety of controls if it is possible to independently change the driving forces of the left front wheel and the right front wheel.

For example, many riders prefer that the force holding the handle bar (hereinafter referred to as the holding force) remain constant during a turn. However, the holding force varies depending on the speed, the turning radius, etc., of the leaning vehicle. It is difficult to design a leaning vehicle so that the holding force is always constant regardless of speed and turning radius. In addition, some riders may prefer to vary the holding force during a turn depending on their preference rather than keeping it constant. With conventional leaning vehicles, it is not possible to keep the holding force constant or to vary the holding force depending on to the rider's preference. However, if the driving forces of the left front wheel and the right front wheel can be controlled independently of each other, it is possible to perform a control such as varying the holding force depending on the rider's preference.

It is an object of the present invention to provide a leaning vehicle and a method for controlling a leaning vehicle having a left front wheel arranged leftward relative to the head pipe and a right front wheel arranged rightward relative to the head pipe with regard to a vehicle left-right direction in which the driving forces of the left front wheel and the right front wheel can be controlled independently of each other. According to the present invention said object is solved by leaning vehicle having the features of independent claim 1. Preferred embodiments are laid down in the dependent claims.

A leaning vehicle disclosed herein includes: a vehicle body frame including a head pipe; a left front wheel arranged leftward relative to the head pipe; a right front wheel arranged rightward relative to the head pipe; a steering shaft supported by the head pipe and rotatable left and right together with the left front wheel and the right front wheel; a handle bar fixed to the steering shaft and operated by a rider; a link mechanism that links together the vehicle body frame, the left front wheel and the right front wheel so that the vehicle body frame, the left front wheel and the right front wheel can tilt relative to the ground; a left in-wheel motor provided on the left front wheel; and a right in-wheel motor provided on the right front wheel.

With the leaning vehicle described above, the left front wheel can be driven by the left in-wheel motor and the right front wheel can be driven by the right in-wheel motor. Thus, by controlling the left in-wheel motor and the right in-wheel motor, the driving force of the left front wheel and the driving force of the right front wheel can be controlled independently of each other.

Thus, the driving force of the left front wheel and the driving force of the right front wheel can be controlled independently of each other based on the bank angle of the vehicle body frame.

The control device may be configured to be capable of adjusting a difference between a driving force of the left front wheel and a driving force of the right front wheel when turning.

Thus, as the control device adjusts the difference between the driving force of the left front wheel and the driving force of the right front wheel when turning, it is possible to adjust the handle bar holding force when turning.

The leaning vehicle may include an input device operated by the rider. The control device may be communicatively connected to the input device for adjusting a difference between a driving force of the left front wheel and a driving force of the right front wheel when turning based on an input value to the input device by the rider.

Thus, by operating the input device, the rider can input the handle bar holding force to the rider's preference. The control device can control the holding force when turning depending on the rider's preference.

When the leaning vehicle turns, one of the left front wheel and the right front wheel is an outer wheel and the other one is an inner wheel. The control device may be configured to be capable of performing a push steering control in which a driving force of the inner wheel is greater than a driving force of the outer wheel.

The control device may be configured to be capable of performing a pull steering control in which a driving force of the inner wheel is less than a driving force of the outer wheel.

The leaning vehicle according to the present invention includes: a bank angle sensor that detects a bank angle of the vehicle body frame; a vehicle speed sensor that detects a vehicle speed; and a control device communicatively connected to the bank angle sensor and the vehicle speed sensor for controlling the left in-wheel motor and the right in-wheel motor based on the bank angle and the vehicle speed.

Thus, the driving force of the left front wheel and the driving force of the right front wheel can be controlled independently of each other based on the bank angle and the vehicle speed.

The control device may be configured to perform a control of decreasing a driving force of the outer wheel and/or increasing a driving force of the inner wheel when the bank angle is equal to or greater than a threshold value.

Thus, when the bank angle is too deep when turning, the bank angle can be automatically adjusted to be shallow without the rider having to increase the handle bar holding force. The rider can relatively easily raise the vehicle body frame.

The control device may be configured to perform an anti-tipping control of decreasing a driving force of the outer wheel and/or increasing a driving force of the inner wheel when the vehicle speed is equal to or greater than a first threshold value and the bank angle is equal to or greater than a second threshold value.

Thus, it is possible to prevent the leaning vehicle from tipping over when the leaning vehicle makes a sharp turn at a relatively high speed.

The leaning vehicle may include an angular speed sensor that detects an angular speed of the bank angle of the vehicle body frame. The control device may be configured to perform an anti-tipping control of decreasing a driving force of the outer wheel and/or increasing a driving force of the inner wheel when the vehicle speed is equal to or greater than a first threshold value and the angular speed of the bank angle is equal to or greater than a third threshold value.

Thus, it is possible to prevent the leaning vehicle from tipping over when the leaning vehicle makes a sharp turn at a relatively high speed.

The leaning vehicle according to the present invention includes a front sensor that detects an object in front. Note that the term "object" includes another vehicle traveling in front of the leaning vehicle (hereinafter referred to as a preceding vehicle), a drive lane marked on the road, and the like. The control device is configured to, when the front sensor detects the object and when the vehicle speed is equal to or greater than a fourth threshold value and the bank angle is less than or equal to a fifth threshold value, perform a notification control of alternating between a first state in which a driving force of the right front wheel is greater than a driving force of the left front wheel and a second state in which the driving force of the left front wheel is greater than the driving force of the right front wheel.

Thus, when it is detected that there is a predetermined object in front when the leaning vehicle is traveling at a relatively high speed, it is possible to notify the rider by alternating the first state and the second state with each other. For example, if a preceding vehicle is detected when the leaning vehicle is traveling at a relatively high speed, the rider who receives the notification can avoid collision with the preceding vehicle by decelerating, etc. If the leaning vehicle approaches the center line, it is detected that there is a center line in front. The rider who receives the notification can operate the handle bar to prevent the leaning vehicle from crossing the center line.

### Advantageous Effects Of Invention

According to the present invention, it is possible to provide a leaning vehicle in which the driving forces of the left front wheel and the right front wheel can be controlled independently of each other.

### BRIEF DESCRIPTION OF THE DRAWINGS

FIG. 1 is a left side view of a leaning vehicle according to one embodiment.
FIG. 2 is a front view of a front portion of the leaning vehicle.
FIG. 3 is a left side view of the front portion of the leaning vehicle.
FIG. 4 is a plan view of the front portion of the leaning vehicle.
FIG. 5 is a plan view of the front portion of the leaning vehicle while steering.
FIG. 6 is a front view of the front portion of the leaning vehicle while tilting.
FIG. 7 is a front view of the front portion of the leaning vehicle while tilting and steering.
FIG. 8 is a block diagram of a control system of the leaning vehicle.
FIG. 9 is a flow chart of a first control.
FIG. 10(a) is a graph showing the relationship between the input value and the base factor for the first control. FIG. 10(b) is a graph showing the relationship between the vehicle speed and the speed factor for the first control. FIG. 10(c) is a graph showing the relationship between the bank angle and the bank angle factor for the first control.
FIG. 11(a) is a graph showing the change in the target torque of the right front wheel for the first control. FIG. 11(b) is a graph showing the change in the target torque of the left front wheel for the first control.
FIG. 12 is a flow chart of the second control.
FIG. 13(a) is a graph showing the relationship between the input value and the base factor for the second control. FIG. 13(b) is a graph showing the relationship between the vehicle speed and the speed factor for the second control. FIG. 13(c) is a graph showing the relationship between the bank angular speed and the bank angular speed factor. FIG. 13(d) is a graph showing the relationship between the bank angle and the bank angle factor for the second control.
FIG. 14(a) is a graph showing the relationship between the input value and the base factor for the third control. FIG. 14(b) is a graph showing the relationship between the vehicle speed and the speed factor for the third control. FIG. 14(c) is a graph showing the relationship between the bank angular speed and the bank angular speed factor. FIG. 14(d) is a graph showing the relationship between the bank angle and the bank angle factor for the third control.
FIG. 15 is a flow chart of the fourth control.
FIG. 16(a) is a graph showing the relationship between the input value and the base factor for the fourth control. FIG. 16(b) is a graph showing the relationship between the vehicle speed and the speed factor for the fourth control. FIG. 16(c) is a graph showing the relationship between the bank angle and the bank angle factor for the fourth control.
FIG. 17(a) is a graph showing the change in the adjustment torque for the right front wheel. FIG. 17(b) is a graph showing the change in the adjustment torque for the left front wheel.

### DETAILED DESCRIPTION OF THE PREFERRED EMBODIMENTS

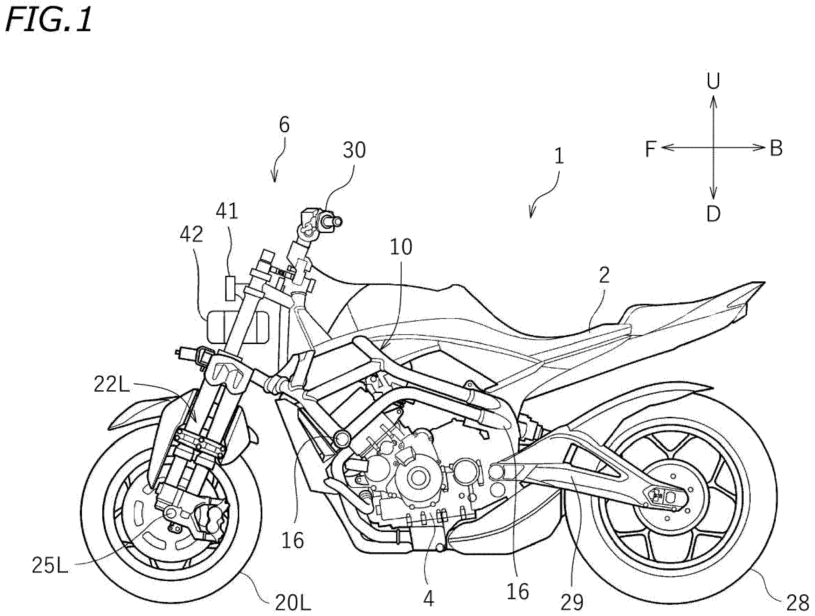

An embodiment of the leaning vehicle will now be described with reference to the drawings. FIG. 1 is a left side view of a leaning vehicle 1 according to one embodiment.

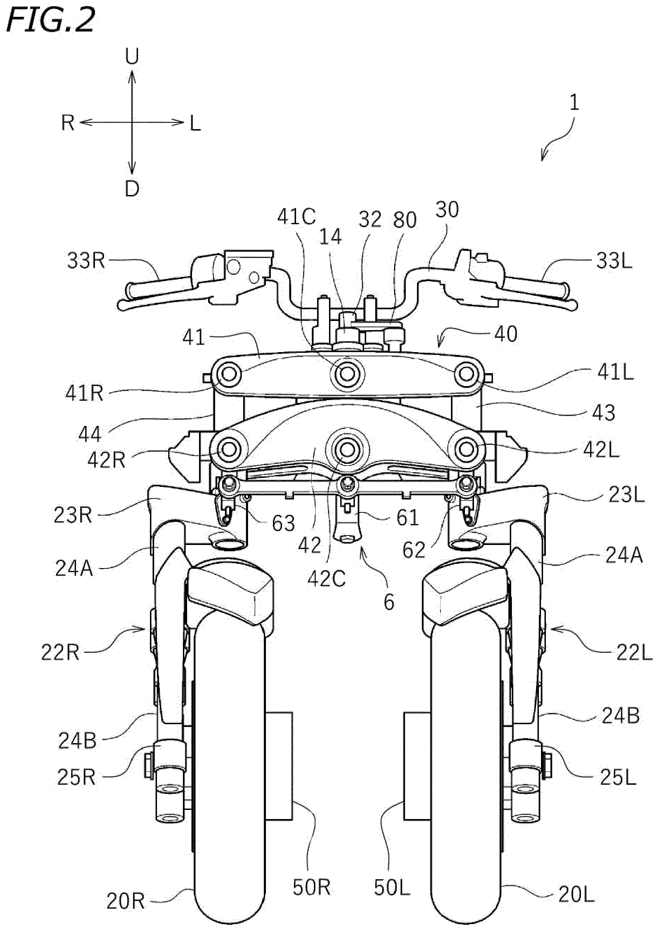

The terms front, rear, left, right, up and down, as used in the description below, refer to these directions as seen from a virtual rider seated on a seat 2 while the leaning vehicle 1 is standing upright on a horizontal surface with no rider and no load thereon, unless specified otherwise. Accordingly, it is referred to the vehicle front-rear direction according to the indication F↔B, the vehicle up-down direction according to the indication U↔D and the vehicle left-right direction according to the indication L↔R in the figures with the vehicle in the upright position. Note that standing upright on a horizontal surface refers to a state where a vehicle body frame 10 to be described below is not tilted relative to the horizontal surface (see FIG. 2). The designations F, B, L, R, U and D, as used in the figures, refer to front, rear, left, right, up and down, respectively.

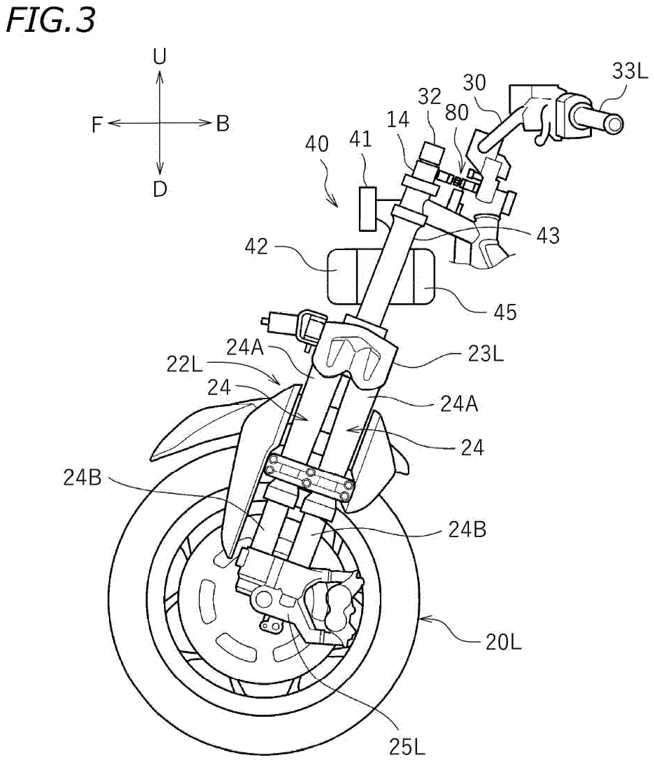

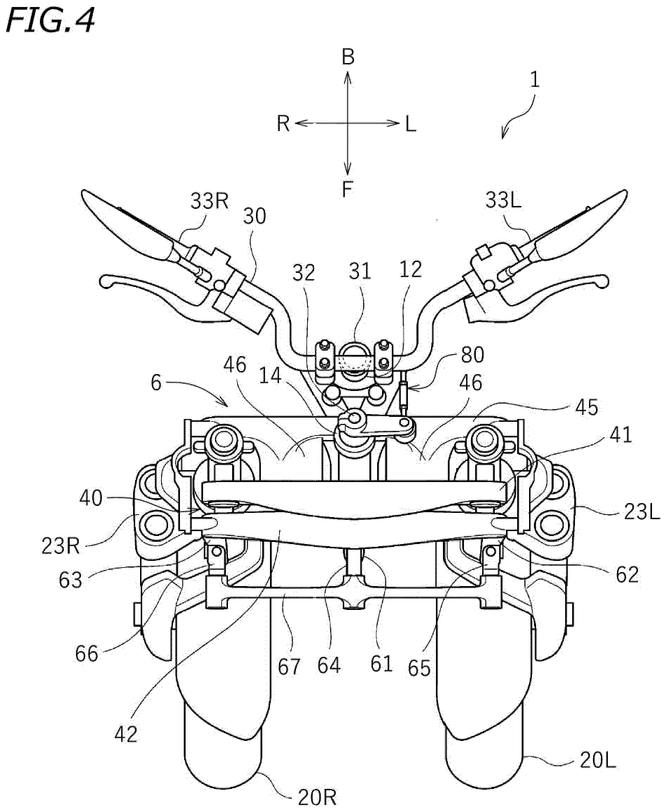

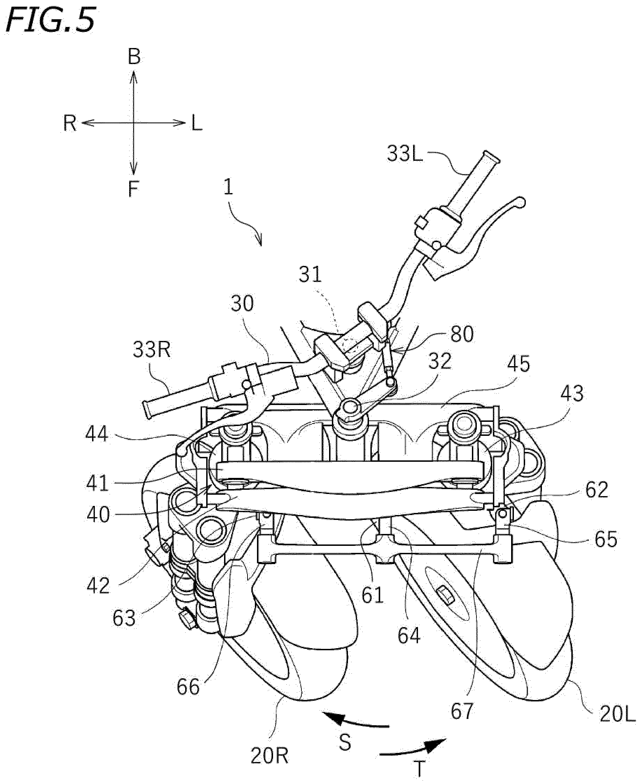

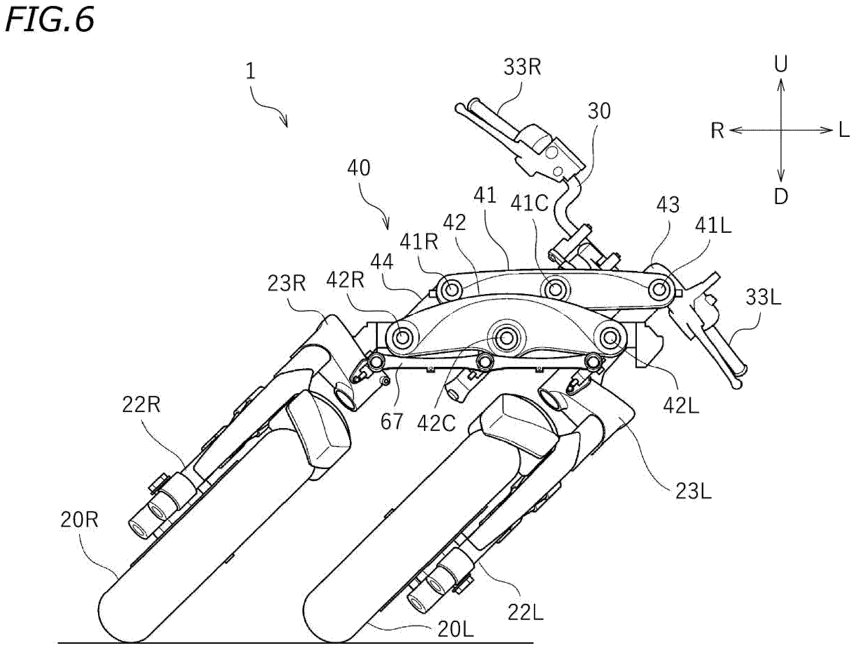

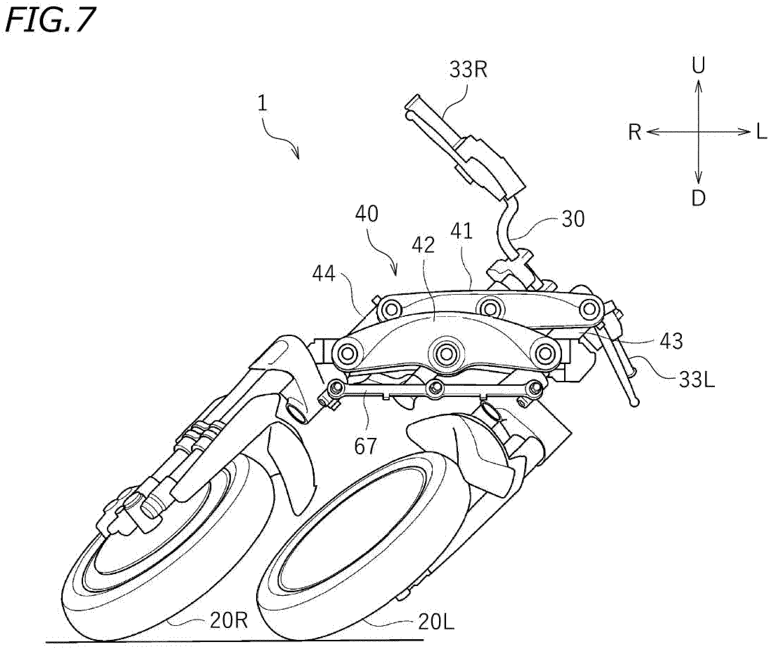

FIG. 2 is a front view of the front portion of the leaning vehicle 1. FIG. 3 is a left side view of the front portion of the leaning vehicle 1. FIG. 4 is a plan view of the front portion of the leaning vehicle 1. FIG. 5 is a plan view of the front portion of the leaning vehicle 1 while steering. FIG. 6 is a front view of the front portion of the leaning vehicle 1 while tilting. FIG. 7 is a front view of the front portion of the leaning vehicle 1 while tilting and steering.

As shown in FIG. 1, the leaning vehicle 1 includes the vehicle body frame 10, the seat 2 supported by the vehicle body frame 10, a left front wheel 20L, a right front wheel 20R (see FIG. 2), a rear wheel 28, and a power unit 4. As shown in FIG. 2, the leaning vehicle 1 includes a handle bar 30, a link mechanism 40 that links together the vehicle body frame 10, the left front wheel 20L and the right front wheel 20R, a left in-wheel motor 50L provided on the left front wheel 20L, and a right in-wheel motor 50R provided on the right front wheel 20R. Note that FIG 3 to FIG. 7 do not show the left in-wheel motor 50L and the right in-wheel motor 50R.

As shown in FIG. 4, the vehicle body frame 10 includes a head pipe 12 and a link pipe 14 arranged forward relative to the head pipe 12. The head pipe 12 supports a steering shaft 31 fixed to the handle bar 30 so that the steering shaft 31 is rotatable left and right. The link pipe 14 supports the steering shaft 32 so that the steering shaft 32 is rotatable left and right.

As shown in FIG. 1, a power unit 4 is supported by the vehicle body frame 10. The vehicle body frame 10 includes a power unit support portion 16 that supports the power unit 4. The front end portion of a rear arm 29 is connected to the power unit 4 so that a rear arm 29 is rotatable up and down. The rear wheel 28 is attached to the rear end portion of the rear arm 29. The power unit 4 is linked to the rear wheel 28. The power unit 4 includes a power source which is an internal combustion engine or an electric motor. The power unit 4 drives the rear wheel 28.

As shown in FIG. 4, the left front wheel 20L is arranged leftward relative to the head pipe 12. The right front wheel 20R is arranged rightward relative to the head pipe 12. The left front wheel 20L and the right front wheel 20R can rotate left and right together with the steering shaft 31.

As shown in FIG. 2, the left in-wheel motor 50L is connected to the left front wheel 20L. The right in-wheel motor 50R is connected to the right front wheel 20R. The left in-wheel motor 50L drives the left front wheel 20L and the right in-wheel motor 50R drives the right front wheel 20R.

The leaning vehicle 1 includes a left shock-absorbing device 22L and a right shock-absorbing device 22R. As shown in FIG. 3, the left shock-absorbing device 22L is a so-called telescopic shock-absorbing device. The left shock-absorbing device 22L includes a pair of (front and rear) telescopic elements 24. Each telescopic element 24 includes an outer tube 24A and an inner tube 24B inserted into the outer tube 24A. As shown in FIG. 2, the right shock-absorbing device 22R is arranged in left-right symmetry with the left shock-absorbing device 22L. The right shock-absorbing device 22R has the same configuration as the left shock-absorbing device 22L. The right shock-absorbing device 22R also includes a pair of (front and rear) telescopic elements 24.

As shown in FIG. 2, the leaning vehicle 1 includes a left bracket 23L, a left bracket 25L, a right bracket 23R and a right bracket 25R. As shown in FIG. 3, the upper end portions of the telescopic elements 24 of the left shock-absorbing device 22L are fixed to the left bracket 23L. The lower end portions of the telescopic elements 24 of the left shock-absorbing device 22L are fixed to the left bracket 25L. The left front wheel 20L is supported by the left bracket 25L. As shown in FIG. 2, the upper end portions of the telescopic elements 24 of the right shock-absorbing device 22R are fixed to the right bracket 23R. The lower end portions of the telescopic elements 24 of the right shock-absorbing device 22R are fixed to the right bracket 25R. The right front wheel 20R is supported by the right bracket 25R.

As shown in FIG. 4, the leaning vehicle 1 includes a steering force transmission mechanism 6. The steering force transmission mechanism 6 includes a handle bar 30, a steering shaft 31, and a steering shaft 32 arranged forward relative to the steering shaft 31. The steering shaft 31 is supported by the head pipe 12 so that the steering shaft 31 is rotatable left and right. The steering shaft 32 is supported by the link pipe 14 so that the steering shaft 32 is rotatable left and right. The handle bar 30 is fixed to the steering shaft 31. A right grip 33R and a left grip 33L are attached to the handle bar 30. The right grip 33R is rotatable relative to the handle bar 30, and forms an accelerator grip for the rider to control the power unit 4. The steering shaft 31 and the steering shaft 32 are linked together by a link member 80. The link member 80 links together the steering shaft 31 and the steering shaft 32 so that they rotate together.

The link mechanism 40 is a parallelogram link-type link mechanism. As shown in FIG. 2, the link mechanism 40 includes an upper cross member 41, a lower cross member 42 and a lower cross member 45 (see FIG. 3) each extending left and right, and a left side member 43 and a right side member 44 each extending up and down. The link mechanism 40 is supported by the steering shaft 32, which is supported by the link pipe 14 so as to be rotatable left and right. The link mechanism 40 is rotatable left and right relative to the steering shaft 32 (see FIG. 5). The link mechanism 40 is configured so as not to rotate together with the steering shaft 32 even when the steering shaft 32 rotates to left and right.

The upper cross member 41 is connected to the link pipe 14 by a link shaft 41C, to the left side member 43 by a link shaft 41L, and to the right side member 44 by a link shaft 41R. The upper cross member 41 is linked to the link pipe 14, the left side member 43 and the right side member 44 so that the upper cross member 41 is rotatable around an axis extending in the front-rear direction.

As shown in FIG. 4, the lower cross member 42 is arranged forward of the link pipe 14. The lower cross member 45 is arranged rearward of the link pipe 14. The lower cross member 42 and the lower cross member 45 are connected together by a link block 46.

As shown in FIG. 2, the lower cross member 42 is connected to the link pipe 14 by a link shaft 42C, to the left side member 43 by a link shaft 42L, and to the right side member 44 by a link shaft 42R. The lower cross member 42 is linked to the link pipe 14, the left side member 43 and the right side member 44 so that the lower cross member 42 is rotatable around an axis extending in the front-rear direction.

A lower portion of the left side member 43 is connected to the left bracket 23L. The left bracket 23L is connected to the left side member 43 so that the left bracket 23L is rotatable around an axis extending in the up-down direction. A lower portion of the right side member 44 is connected to the right bracket 23R. The right bracket 23R is connected to the right side member 44 around an axis extending in the up-down direction.

As shown in FIG. 2 and FIG. 4, the steering force transmission mechanism 6 includes a middle transmission plate 61, a left transmission plate 62, a right transmission plate 63, a middle joint 64, a left joint 65, a right joint 66, and a tie rod 67.

The middle transmission plate 61 is connected to the lower portion of the steering shaft 32. The middle transmission plate 61 extends forward from the steering shaft 32 (see FIG. 4). The left transmission plate 62 is connected to the left bracket 23L. The right transmission plate 63 is connected to the right bracket 23R.

As shown in FIG. 4, the middle joint 64 is connected to the front portion of the middle transmission plate 61. The middle joint 64 is connected to the middle transmission plate 61 so that the middle joint 64 is rotatable around an axis extending in the up-down direction. The left joint 65 is connected to the front portion of the left transmission plate 62. The left joint 65 is connected to the left transmission plate 62 so that the left joint 65 is rotatable around an axis extending in the up-down direction. The right joint 66 is connected to the front portion of the right transmission plate 63. The right joint 66 is connected to the right transmission plate 63 so that the right joint 66 is rotatable around an axis extending in the up-down direction.

The tie rod 67 is connected to each of the middle joint 64, the left joint 65 and the right joint 66 so that the tie rod 67 is rotatable around an axis extending in the front-rear direction.

Thus, the handle bar 30, the left front wheel 20L and the right front wheel 20R are linked together via the steering force transmission mechanism 6. As shown in FIG. 5, when the rider steers the handle bar 30, the steering shaft 31 rotates to left and right. As the steering shaft 31 rotates, the left front wheel 20L and the right front wheel 20R rotate left and right, changing the direction of travel of the left front wheel 20L and the right front wheel 20R as indicated by arrows S and T.

The vehicle body frame 10, the left front wheel 20L and right front wheel 20R are linked together via the link mechanism 40. As shown in FIG. 6, when the rider tilts the vehicle body frame 10, the left front wheel 20L and right front wheel 20R also tilt.

As shown in FIG. 7, when the rider steers the handle bar 30 and tilts the vehicle body frame 10, the left front wheel 20L and the right front wheel 20R tilt and the direction of travel is changed.

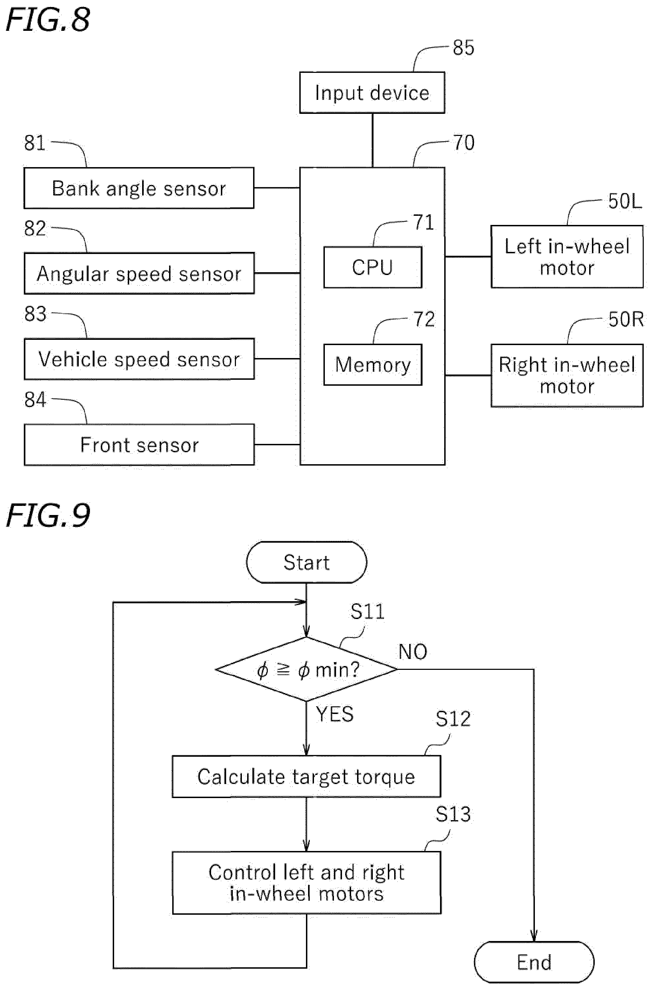

As described above, the leaning vehicle 1 includes the left in-wheel motor 50L that drives the left front wheel 20L and the right in-wheel motor 50R that drives the right front wheel 20R (see FIG. 2). The leaning vehicle 1 can control the left front wheel 20L and the right front wheel 20R independently of each other. As shown in FIG. 8, the leaning vehicle 1 includes a control device 70 that controls the left in-wheel motor 50L and the right in-wheel motor 50R. The control device 70 is a microcomputer having a CPU 71 and a memory 72. The control device 70 may be separate from the control device controlling the power unit 4, or may be used also as the control device for controlling the power unit 4. The control device 70 is communicatively connected to the left in-wheel motor 50L and the right in-wheel motor 50R.

The leaning vehicle 1 includes a bank angle sensor 81 that detects the bank angle of the vehicle body frame 10 (hereinafter simply referred to as the bank angle), an angular speed sensor 82 that detects the angular speed of the bank angle (hereinafter referred to as the bank angular speed), a vehicle speed sensor 83 that detects the travel speed of the leaning vehicle 1 (hereinafter referred to as the vehicle speed), and a front sensor 84 that detects an object in front of the leaning vehicle 1. The bank angle sensor 81, the angular speed sensor 82, the vehicle speed sensor 83 and the front sensor 84 are communicatively connected to the control device 70. An inertial measurement unit (IMU), for example, can be suitably used for the bank angle sensor 81. Note however that there is no limitation on the bank angle sensor 81. The bank angle sensor 81 may be, for example, a potentiometer that detects the amount of change of the link mechanism 40 (e.g., the rotation angle of the left side member 43 relative to the upper cross member 41). While the angular speed sensor 82 may be a separate sensor from the bank angle sensor 81, the control device 70 may detect the bank angular speed by calculating the amount of change per unit time in the bank angle detected by the bank angle sensor 81. In this case, the angular speed sensor 82 is composed of the bank angle sensor 81 and the control device 70. A camera, a millimeter wave radar, a sensor using LiDAR (Light Detection And Ranging), or an infrared sensor may be suitably used for the front sensor 84.

The leaning vehicle 1 includes an input device 85 operated by the rider. There is no particular limitation on the arrangement of the input device 85. For example, the input device 85 may be arranged rearward of the handle bar 30 and forward of the seat 2. As described below, the leaning vehicle 1 can be controlled in various ways by controlling the drive torque of the left front wheel 20L and the right front wheel 20R. The input device 85 is used for applications where the rider adjusts the amount of control related to those controls. There is no limitation on the specific configuration of the input device 85. The input device 85 may include, for example, an input dial, a numeric keypad, an enter key, or a touch panel.

The leaning vehicle 1 is configured as described above. The leaning vehicle 1 according to the present embodiment can control the drive torque of the left front wheel 20L and the drive torque of the right front wheel 20R independently of each other, allowing for a variety of controls. Note that as used herein, the drive torque (hereinafter simply referred to as torque) is synonymous with driving force. Next, example controls that can be performed by the leaning vehicle 1 will be described.

### (First control)

The first control is a control of adjusting the steering holding characteristics depending on the rider's preference. Note that the steering holding characteristics are characteristics related to the force (that is, holding force) with which the rider holds the handle bar 30 while turning the leaning vehicle 1. FIG. 9 is a flow chart of the first control.

First, in step S11, it is determined whether the bank angle φ detected by the bank angle sensor 81 is equal to or greater than a predetermined threshold value φmin. Note that when the leaning vehicle 1 is traveling straight ahead, the vehicle body frame 10 may tilt slightly left and right. However, when the leaning vehicle 1 is traveling straight ahead, the bank angle φ does not become large. On the other hand, when the leaning vehicle 1 is turning, the bank angle φ becomes relatively large. The threshold value φmin is set in advance to a predetermined value as the lowest bank angle φ when the leaning vehicle 1 is considered to be turning. The threshold value φmin is stored in the memory 72 of the control device 70 (see FIG. 8). In step S11, it is determined whether the leaning vehicle 1 is turning or not. If the determination result of step S11 is YES, then the process proceeds to step S12. If the determination result of step S11 is NO, this control is terminated.

In step S12, the control device 70 calculates the target torques for the left front wheel 20L and the right front wheel 20R based on the information regarding the steering holding characteristics input by the rider and the driving status of the leaning vehicle 1.

In step S13, the control device 70 controls the left in-wheel motor 50L and the right in-wheel motor 50R so that the torques output by the left front wheel 20L and the right front wheel 20R become the respective target torques. Thereafter, the process returns to step S11.

There is no limitation on the method of calculating the target torques in step S12. The target torques are calculated, for example, as follows. In one example of calculating the target torques, the control device 70 calculates the target torque TL for the left front wheel 20L and the target torque TR for the right front wheel 20R based on the input value M to the input device 85 by the rider, the vehicle speed V and the bank angle φ. The target torques TL, TR are calculated by adding or subtracting the adjustment torque ΔT to or from the reference torque T0. Here, the reference torque T0 is the target torque for the left front wheel 20L and the right front wheel 20R, which is determined based on the amount of operation of the accelerator grip 33R by the rider and the driving status of the leaning vehicle 1. When the leaning vehicle 1 is traveling straight ahead, the target torque TL of the left front wheel 20L and the target torque TR of the right front wheel 20R are equal to each other, which coincides with the reference torque T0. The adjustment torque ΔT is a torque that is added or subtracted to adjust the steering holding characteristics. Here, the adjustment torque ΔT is calculated by multiplying a predetermined torque Tm by a coefficient K. ΔT = K×Tm. The coefficient K is calculated by multiplying together the base factor FB, the speed factor Fv and the bank angle factor Fφ. That is, K = FB×Fv×Fφ.

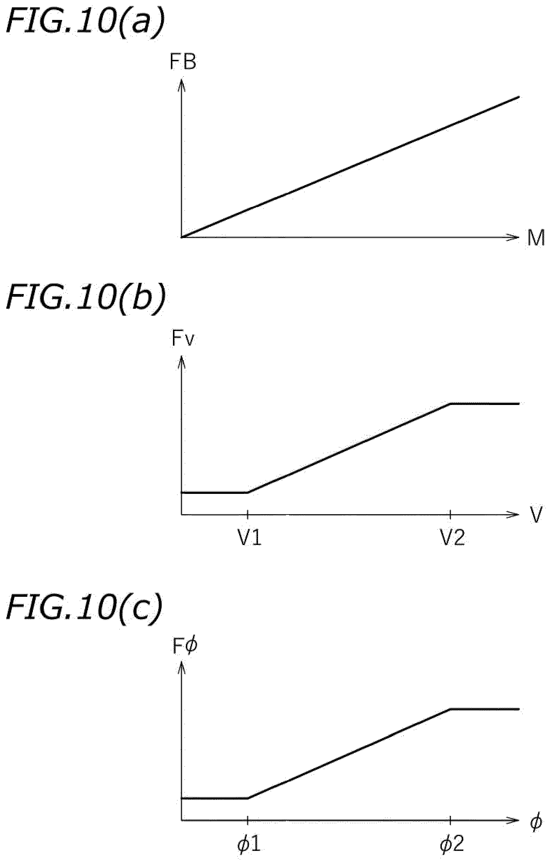

FIG. 10(a) is a graph showing the relationship between the input value M and the base factor FB. Note that there is no limitation on the method of inputting the input value M to the input device 85. For example, if the input device 85 includes an input dial and an enter key, the input value M can be changed by rotating the input dial and the input value M can be input by pressing the enter key. If the input device 85 includes a numeric keypad and an enter key, the input value M can be changed by pressing the numeric keypad, and the input value M can be entered by pressing the enter key. If the input device 85 includes a touch panel, the input value M can be changed and input by operating the touch panel. The same applies to the input of the input value M in each of the controls to be described below.

FIG. 10(b) is a graph showing the relationship between the vehicle speed V and the speed factor Fv. Here, between V1 and V2, the speed factor Fv is set so that the greater the vehicle speed V, the greater the speed factor Fv. FIG. 10(c) is a graph showing the relationship between the bank angle φ and the bank angle factor Fφ. Here, between φ1 and φ2, the bank angle factor Fφ is set so that the larger the bank angle φ, the larger the bank angle factor Fφ. Note that the information shown in FIG. 10(a) to FIG. 10(c) is stored in the memory 72 of the control device 70.

When the leaning vehicle 1 turns, one of the left front wheel 20L and the right front wheel 20R is the outer wheel and the other is the inner wheel. Specifically, when the leaning vehicle 1 turns right, the left front wheel 20L is the outer wheel and the right front wheel 20R is the inner wheel. When the leaning vehicle 1 turns left, the right front wheel 20R is the outer wheel and the left front wheel 20L is the inner wheel. In the present embodiment, it is possible to perform a push steering control in which the torque of the inner wheel is greater than the torque of the outer wheel, and a pull steering control in which the torque of the inner wheel is less than the torque of the outer wheel. The rider can operate the input device 85 to select either the push steering control or the pull steering control. For example, a selection switch may be provided on the input device 85, and the rider may select the push steering control or the pull steering control by operating the selection switch.

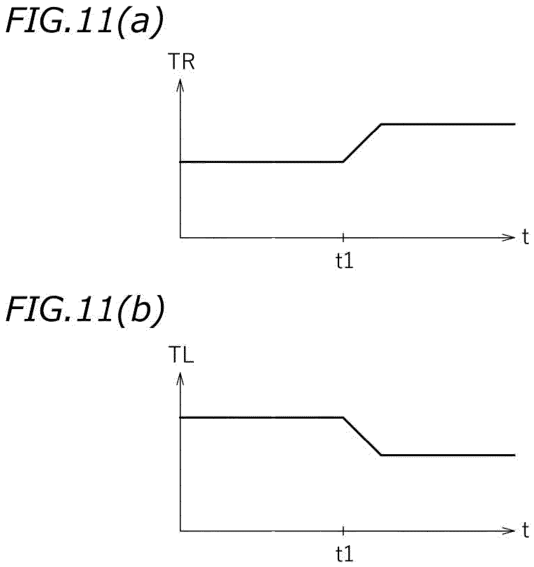

If the rider selects the push steering control, for example, when the leaning vehicle 1 turns right, the control device 70 determines, as the target torque TR for the right front wheel 20R, a torque obtained by adding the adjustment torque ΔT to the reference torque T0, and determines, as the target torque TL for the left front wheel 20L, a torque obtained by subtracting the adjustment torque ΔT from the reference torque T0. That is, TR = T0+ΔT and TL = T0-ΔT. Thus, as shown in FIG. 11(a) and FIG. 11(b), for example, after the leaning vehicle 1 starts to turn right (after time t=t1), the torque TR of the right front wheel 20R increases and the torque TL of the left front wheel 20L decreases. As a result, the torque of the inner wheel is greater than the torque of the outer wheel, so a leftward force is applied to the handle bar 30. A force in the opposite direction to the turning direction of the leaning vehicle 1 acts on the handle bar 30, thereby achieving steering holding characteristics to the rider's preference.

If the rider selects the pull steering control, for example, when the leaning vehicle 1 turns right, the control device 70 determines, as the target torque TR for the right front wheel 20R, a torque obtained by subtracting the adjustment torque ΔT from the reference torque T0, and determines, as the target torque TL for the left front wheel 20L, a torque obtained by adding the adjustment torque ΔT to the reference torque T0. That is, TR = T0-ΔT and TL = T0+ΔT. This causes the torque of the outer wheel to be greater than the torque of the inner wheel, thereby applying a rightward force to the handle bar 30. A force in the same direction as the turning direction of the leaning vehicle 1 acts on the handle bar 30, thereby achieving steering holding characteristics to the rider's preference.

### (Second control)

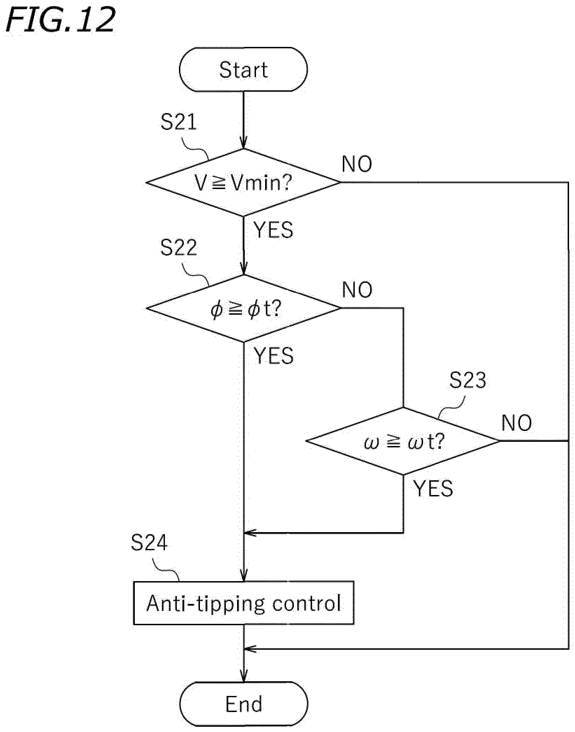

The second control is a control of preventing the leaning vehicle 1 from tipping over when turning. FIG. 12 is a flow chart of the second control.

First, in step S21, it is determined whether the vehicle speed V is equal to or greater than a predetermined threshold value Vmin. Note that the threshold value Vmin is an example of the "first threshold value". The threshold value Vmin is set in advance to a predetermined value as the lowest vehicle speed V when the leaning vehicle 1 is considered to be traveling, and is stored in the memory 72 of the control device 70. If the determination result of step S21 is YES, the process proceeds to step S22. If the determination result of step S21 is NO, this control is terminated.

In step S22, it is determined whether the bank angle φ is equal to or greater than the predetermined threshold value φt. Note that the bank angle φ can take a positive or negative value. The "bank angle φ" in step S22 means the absolute value of the bank angle φ. The threshold value φt is an example of the "second threshold value". Step S22 is a process to determine whether the tilt of the vehicle body frame 10 is large or not. If the determination result of step S22 is YES, the anti-tipping control of step 24 is executed. If the determination result of step S22 is NO, the process proceeds to step S23.

In step S23, it is determined whether the bank angular speed ω = dφ/dt is equal to or greater than the predetermined threshold value ωt. Note that the bank angular speed ω can take a positive or negative value. The "bank angular speed ω" in step S23 means the absolute value of the bank angular speed ω. The threshold value ωt is an example of the "third threshold value". Step S23 is a process to determine whether the speed at which the vehicle body frame 10 tilts is large or not. If the determination result of step S23 is YES, the anti-tipping control of step S24 is executed. If the determination result of step S23 is NO, there is no risk of tipping over, and this control is terminated. Note that the order of step S22 and step S23 may be reversed. In this case, if the determination result of step S23 is YES, the process proceeds to step S24, and if the determination result of step S23 is NO, the process executes step S22.

While there is no limitation on the specific process of step S24, the process as follows is performed, for example. Here, the control device 70 calculates the target torque TL for the left front wheel 20L and the target torque TR for the right front wheel 20R based on the input value M to the input device 85 by the rider, the vehicle speed V, the bank angle φ and the bank angular speed ω. As in the first control example, the control device 70 calculates the target torques TL, TR by adding or subtracting the adjustment torque ΔT to or from the reference torque T0. The adjustment torque ΔT is calculated by multiplying the predetermined torque Tm by the coefficient K. ΔT = K×Tm. The coefficient K is calculated by multiplying together the base factor FB, the speed factor Fv, the bank angular speed factor Fω and the bank angle factor Fφ. That is, K = FB×Fv×Fω×Fφ.

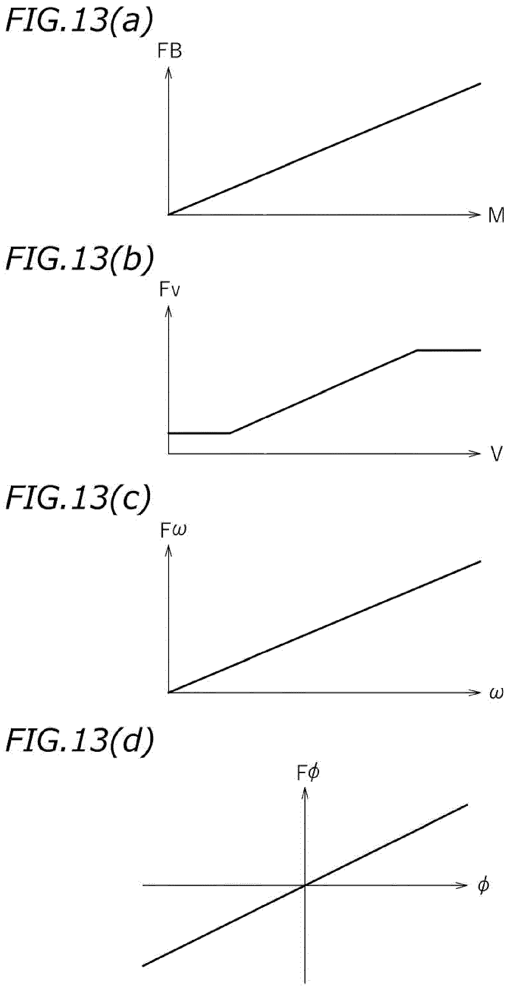

FIG. 13(a) is a graph showing the relationship between the input value M and the base factor FB. FIG. 13(b) is a graph showing the relationship between the vehicle speed V and the speed factor Fv. FIG. 13(c) is a graph showing the relationship between the bank angular speed ω and the bank angular speed factor Fω. Note that while the bank angular speed ω can take a positive or negative value, the bank angular speed ω shown in FIG. 13(c) means the absolute value of the bank angular speed ω. FIG. 13(d) is a graph showing the relationship between the bank angle φ and the bank angle factor Fφ. Here, regarding positive/negative of the bank angle φ, positive is rightward and negative is leftward. Thus, the bank angle φ takes a positive value when turning right, and the bank angle φ takes a negative value when turning left. The information shown in FIG. 13(a) to FIG. 13(d) is stored in the memory 72 of the control device 70.

For example, when the leaning vehicle 1 turns right, the control device 70 determines, as the target torque TR for the right front wheel 20R, a torque obtained by adding the adjustment torque ΔT to the reference torque T0, and determines, as the target torque TL for the left front wheel 20L, a torque obtained by subtracting the adjustment torque ΔT from the reference torque T0. That is, TR = T0+ΔT and TL = T0-ΔT. When the leaning vehicle 1 turns right, the bank angle factor Fφ is positive because the bank angle φ takes a positive value (see FIG. 13(d)), and K takes a positive value. Since ΔT = K×Tm, ΔT takes a positive value. Therefore, the target torque TR of the right front wheel 20R is greater than the reference torque T0, and the target torque TL of the left front wheel 20L is less than the reference torque T0.

When the leaning vehicle 1 turns right, the left front wheel 20L is the outer wheel and the right front wheel 20R is the inner wheel. Therefore, when the control device 70 adjusts the target torque TL for the left front wheel 20L and the target torque TR for the right front wheel 20R as described above, the torque of the inner wheel increases and the torque of the outer wheel decreases. Therefore, a leftward force is applied to the handle bar 30. A force in the opposite direction to the turning direction of the leaning vehicle 1 acts on the handle bar 30, and the vehicle body frame 10 is subjected to a force urging the vehicle body frame 10 to be upright. Therefore, it is possible to prevent the leaning vehicle 1 from tipping over. According to the present embodiment, the larger the bank angular speed ω is, the larger the bank angular speed factor Fω is (see FIG. 13(c)), and the larger the bank angle φ is, the larger the bank angle factor Fφ is (see FIG. 13(d)). Therefore, the leaning vehicle 1 can be more reliably prevented from tipping over.

Note that the process described above regarding step S24 is only an example. The control amount factor K may be determined based on only one of the base factor FB, the speed factor Fv, the bank angular speed factor Fω and the bank angle factor Fφ, or may be determined based on any two or three of the factors.

### (Third control)

The third control is a control of generating a force urging the vehicle body frame 10 to be upright when the bank angle of the vehicle body frame 10 is equal to or greater than a predetermined value while the leaning vehicle 1 is turning.

In the third control, steps S11 to S13 are executed as in the first control (see FIG. 9). Note however that in the third control, the processing of step S12 is different than in the first control.

In the third control, the following process is performed in step S12, for example. The control device 70 calculates the target torque TL for the left front wheel 20L and the target torque TR for the right front wheel 20R based on the input value M to the input device 85 by the rider, the vehicle speed V, the bank angular speed ω and the bank angle φ. The control device 70 calculates the target torques TL, TR by adding or subtracting the adjustment torque ΔT to or from the reference torque T0. The adjustment torque ΔT is calculated by multiplying the predetermined torque Tm by the coefficient K. ΔT = K×Tm. The coefficient K is calculated by multiplying together the base factor FB, the speed factor Fv, the bank angular speed factor Fω and the bank angle factor Fφ. K = FB×Fv×Fω×Fφ.

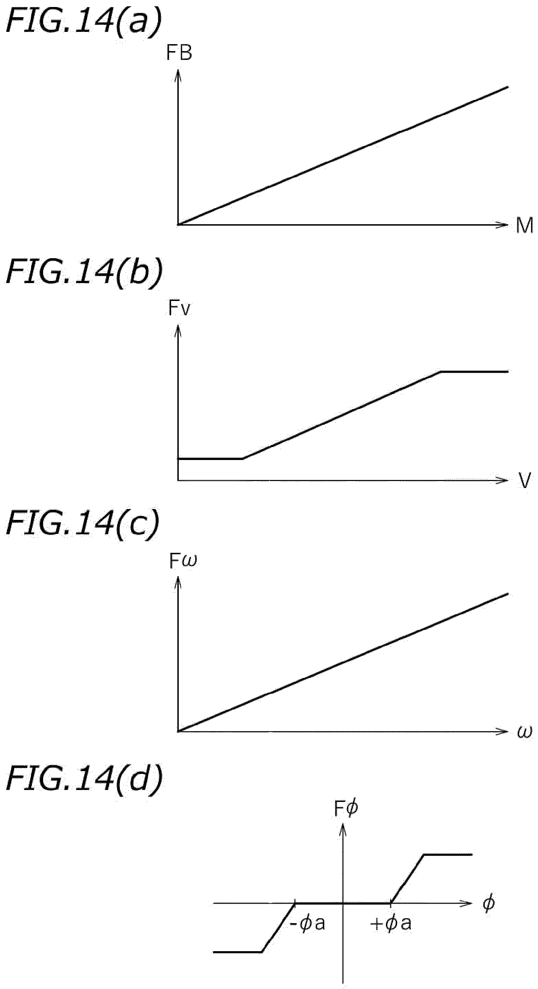

FIG. 14(a) is a graph showing the relationship between the input value M and the base factor FB. FIG. 14(b) is a graph showing the relationship between the vehicle speed V and the speed factor Fv. FIG. 14(c) is a graph showing the relationship between the bank angular speed ω and the bank angular speed factor Fω. Note that while the bank angular speed ω can take a positive or negative value, the bank angular speed ω shown in FIG. 14(c) means the absolute value of the bank angular speed ω. FIG. 14(d) is a graph showing the relationship between the bank angle φ and the bank angle factor Fφ. Here, regarding positive/negative of the bank angle φ, positive is rightward and negative is leftward. Therefore, the bank angle takes a positive value when turning right and the bank angle takes a negative value when turning left. The bank angle factor Fφ is zero when the bank angle φ is -φa<φ<φa relative to the predetermined threshold φa. Therefore, when the absolute value of the bank angle φ is relatively small, i.e., 0<|φ|<φa, K=0, the torques of the left front wheel 20L and the right front wheel 20R are not adjusted. On the other hand, when the absolute value of the bank angle φ is relatively large, i.e., φa≤|φ|, K takes a positive or negative value, and the torques of the left front wheel 20L and the right front wheel 20R are adjusted. Note that the information shown in FIG. 14(a) to FIG. 14(d) is stored in the memory 72 of the control device 70.

For example, when the leaning vehicle 1 turns right, the control device 70 determines, as the target torque TR of the right front wheel 20R, a torque obtained by adding the adjustment torque ΔT to the reference torque T0, and determines, as the target torque TL for the left front wheel 20L, a torque obtained by subtracting the adjustment torque ΔT from the reference torque T0. That is, TR = T0+ΔT and TL = T0-ΔT. When the leaning vehicle 1 turns right, the bank angle φ takes a positive value, so the bank angle factor Fφ is positive when φa≤φ (see FIG. 14(d)) and K takes a positive value. Since ΔT = K×Tm, ΔT takes a positive value. Therefore, when φa≤φ, the target torque TR of the right front wheel 20R is greater than the reference torque T0, and the target torque TL of the left front wheel 20L is less than the reference torque T0.

When the leaning vehicle 1 turns right, the left front wheel 20L is the outer wheel and the right front wheel 20R is the inner wheel. Therefore, as the control device 70 adjusts the target torque TL of the left front wheel 20L and the target torque TR of the right front wheel 20R as described above, the torque of the inner wheel is larger and the torque of the outer wheel is smaller when φa≤φ. Therefore, a leftward force is applied to the handle bar 30. A force in the opposite direction to the turning direction of the leaning vehicle 1 acts on the handle bar 30, and the vehicle body frame 10 is subjected to a force urging the vehicle body frame 10 to be upright. According to the present embodiment, when the bank angle φ is relatively small (i.e., when 0<φ<φa), no force is generated that urges the vehicle body frame 10 to be upright, and when the bank angle φ is relatively large (i.e., when φa≤φ), a force is generated that urges the vehicle body frame 10 to be upright. Therefore, when the bank angle φ is too large, the rider can relatively easily raise the vehicle body frame 10.

Note that where the target torque is not adjusted when the bank angle φ is less than a predetermined value and the target torque is adjusted when the bank angle φ is equal to or greater than the predetermined value, as in the present control, the following effects can also be obtained. That is, when the bank angle φ becomes equal to or greater than the predetermined value, there is a difference between the torque of the left front wheel 20L and the torque of the right front wheel 20R, thereby changing the force acting on the handle bar 30. Therefore, the rider can know that the bank angle φ has become equal to or greater than the predetermined value by feeling the change in the load on the handle bar 30. For example, if the predetermined value is set to the tilt limit value, the rider can be notified of the tilt limit while the leaning vehicle 1 is turning.

### (Fourth control)

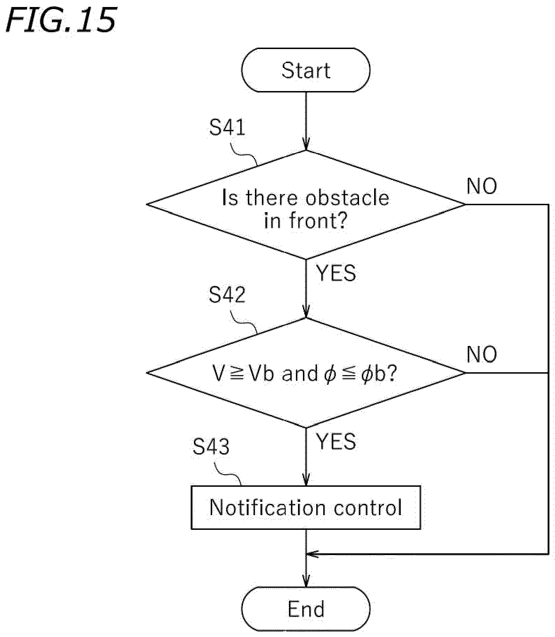

The fourth control is a control that notifies the rider when an object in front of the leaning vehicle 1 is detected. FIG. 15 is a flow chart of the fourth control.

First, in step S41, it is determined from the detection result of the front sensor 84 whether there is an object such as another vehicle or a wall (hereinafter referred to as an obstacle) in front of the leaning vehicle 1. In the present embodiment, the notification to the rider is given when the leaning vehicle 1 is moving straight ahead and the vehicle speed is relatively high. Therefore, in step S42, it is determined whether the vehicle speed V is equal to or greater than the threshold value Vb and whether the bank angle φ is less than or equal to the threshold value φb. Note that Vb is an example of the "fourth threshold value" and φb is an example of the "fifth threshold value". If the determination result of step S42 is YES, the process proceeds to step S43, giving a notification to the rider.

In step S43, a notification control is performed to alternate between a first state in which the torque of the right front wheel 20R is greater than the torque of the left front wheel 20L and a second state in which the torque of the left front wheel 20L is greater than the torque of the right front wheel 20R. While there is no limitation on the specific process of step S43, the following process is performed, for example.

The control device 70 calculates the target torque TL of the left front wheel 20L and the target torque TR of the right front wheel 20R based on the input value M to the input device 85 by the rider. The control device 70 calculates the target torques TL, TR by adding or subtracting the adjustment torque ΔT to or from the reference torque T0. The adjustment torque ΔT is calculated by multiplying the predetermined torque Tm by the coefficient K. Here, the coefficient K is calculated by multiplying together the base factor FB, the speed factor Fv and the bank angle factor Fφ. K = FB×Fv×Fφ.

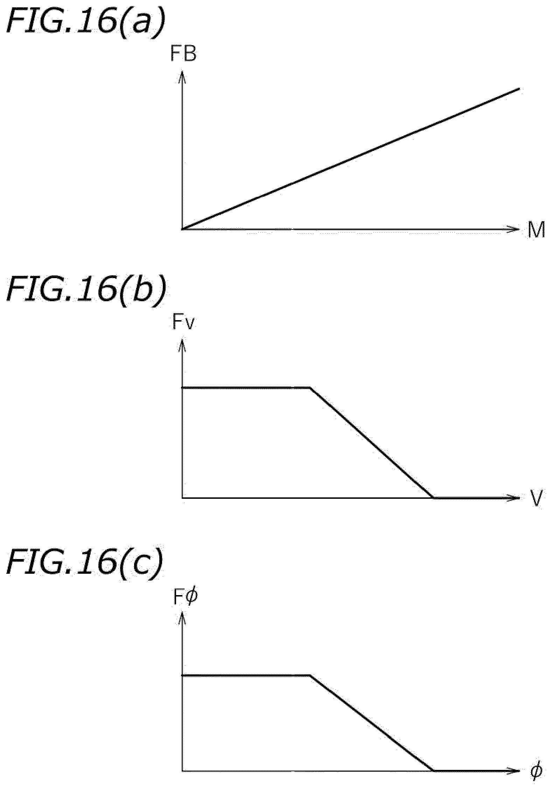

FIG. 16(a) is a graph showing the relationship between the input value M and the base factor FB. FIG. 16(b) is a graph showing the relationship between the vehicle speed V and the speed factor Fv. FIG. 16(c) is a graph showing the relationship between the bank angle φ and the bank angle factor Fφ. Note that while the bank angle can take a positive or negative value, the bank angle φ shown in FIG. 16(c) means the absolute value of the bank angle. The information shown in FIG. 16(a) to FIG. 16(c) is stored in the memory 72 of the control device 70.

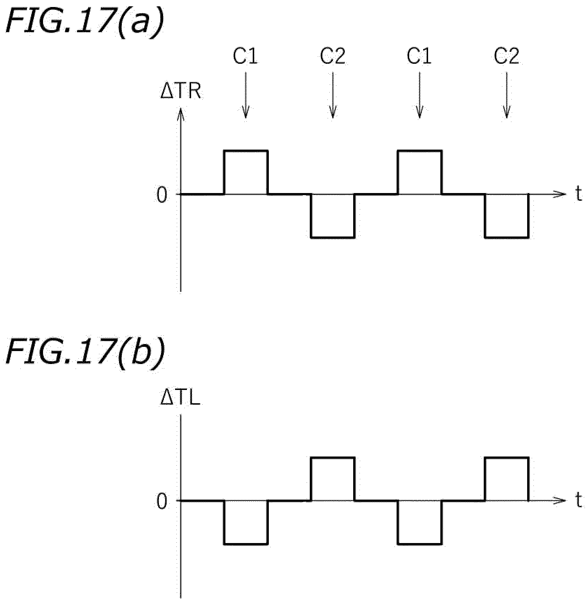

FIG. 17(a), FIG. 17(b) are graphs representing the change in the adjustment torque ΔTR for the right front wheel 20R and the adjustment torque ΔTL for the left front wheel 20L, respectively. The control device 70 alternates between the first state C1 in which ΔTR = +K×Tm and ΔTL = -K×Tm, and the second state C2 in which ΔTR = -K×Tm and ΔTL = +K×Tm. In the first state C1, the torque TR of the right front wheel 20R is greater than the torque TL of the left front wheel 20L, and a leftward force is applied to the handle bar 30. In the second state C2, the torque TL of the left front wheel 20L becomes greater than the torque TR of the right front wheel 20R, and a rightward force is applied to the handle bar 30. Therefore, the first state C1 and the second state C2 alternate with each other, so that a leftward load and a rightward load are alternately applied to the rider holding the handle bar 30. Thus, the rider can know that there is an obstacle in front. That is, a notification is given to the rider. Note that in the present embodiment, the first state C1 and the second state C2 are not continuous, and a state in which the torques of the left front wheel 20L and the right front wheel 20R are not adjusted is interposed between the first state C1 and the second state C2.

According to this control, the rider can easily recognize that there is an obstacle in front by feeling the change in the load of the handle bar 30. Therefore, when there is an obstacle in front, it is possible to initiate, at an earlier point in time, operations such as reducing speed or avoiding obstacles.

Note that in the description above, the front sensor 84 is used to detect whether there is an obstacle in front of the leaning vehicle 1. However, the detection target of the front sensor 84 is not limited to obstacles. For example, the detection target of the front sensor 84 may be a center line on the road surface. For example, the front sensor 84 may determine whether the leaning vehicle 1 is approaching the center line, and if the determination result is YES, the notification control of step S43 may be performed. In this case, the rider can easily grasp that the leaning vehicle 1 may possibly cross the center line. Thus, it is possible to alert the rider not to cross the center line. The rider who receives a notification can operate the handle bar 30 to prevent the leaning vehicle 1 from crossing the center line.

### Reference Signs List

1: Leaning vehicle, 10: Vehicle body frame, 12: Head pipe, 20L: Left front wheel, 20R: Right front wheel, 30: Handle bar, 31: Steering shaft, 40: Link mechanism, 50L: Left in-wheel motor, 50R: Right in-wheel motor, 70: Control device, 81: Bank angle sensor, 82: Angular speed sensor, 83: Vehicle speed sensor, 84: Front sensor, 85: Input device

## Claims

1. A leaning vehicle (1) comprising:
a vehicle body frame (10) including a head pipe (12);
a left front wheel (20L) arranged leftward relative to the head pipe (12) with regard to a vehicle left-right direction;
a right front wheel (20R) arranged rightward relative to the head pipe (12) with regard to the vehicle left-right direction;
a steering shaft (31) supported by the head pipe (12) and rotatable left and right together with the left front wheel (20L) and the right front wheel (20R);
a handle bar (30) fixed to the steering shaft (31) and configured to be operated by a rider;
a link mechanism (40) that links together the vehicle body frame (10), the left front wheel (20L) and the right front wheel (20R) so that the vehicle body frame (10), the left front wheel (20L) and the right front wheel (20R) can tilt relative to a ground on which the vehicle is placed;
a left in-wheel motor (50L) provided on the left front wheel (20L);
a right in-wheel motor (50R) provided on the right front wheel (20R);
a bank angle sensor (81) configured to detect a bank angle (φ) of the vehicle body frame (10);
a vehicle speed sensor (83) configured to detect a vehicle speed (V) of the vehicle (1); and
a control device (70) communicatively connected to the bank angle sensor (81) and the vehicle speed sensor (83) for controlling the left in-wheel motor (50L) and the right in-wheel motor (50R) based on the bank angle (φ) and the vehicle speed (V);
**characterized by**
a front sensor (84) configured to detect an object in front of the vehicle,
wherein the control device (70) is configured to, when the front sensor (84) detects the object in front of the vehicle and when the vehicle speed (V) is equal to or greater than a fourth threshold value (Vb) and the bank angle (φ) is less than or equal to a fifth threshold value (φb), perform a notification control of alternating between a first state in which a driving force of the right front wheel (20R) is greater than a driving force of the left front wheel (20L) and a second state in which the driving force of the left front wheel (20L) is greater than the driving force of the right front wheel (20R).

2. The leaning vehicle (1) according to claim 1, **characterized in that** the control device (70) is configured to be capable of adjusting a difference between a driving force of the left front wheel (20L) and a driving force of the right front wheel (20R) when turning.

3. The leaning vehicle (1) according to claim 2, **characterized by:**
an input device (85) configured to be operated by the rider,
wherein the control device (70) is communicatively connected to the input device (85) for adjusting a difference between a driving force of the left front wheel (20L) and a driving force of the right front wheel (20R) when turning based on an input value to the input device (85) by the rider.

4. The leaning vehicle (1) according to claim 3, **characterized in that:**
when turning, one of the left front wheel (20L) and the right front wheel (20R) is an outer wheel and the other one is an inner wheel; and
the control device (70) is configured to be capable of performing a push steering control in which a driving force of the inner wheel is greater than a driving force of the outer wheel.

5. The leaning vehicle (1) according to claim 3, **characterized in that:**
when turning, one of the left front wheel (20L) and the right front wheel (20R) is an outer wheel and the other one is an inner wheel; and
the control device (70) is configured to be capable of performing a pull steering control in which a driving force of the inner wheel is less than a driving force of the outer wheel.

6. The leaning vehicle (1) according to claim 1, **characterized in that:**
when turning, one of the left front wheel (20L) and the right front wheel (20R) is an outer wheel and the other one is an inner wheel; and
the control device (70) is configured to perform a control of decreasing a driving force of the outer wheel and/or increasing a driving force of the inner wheel when the bank angle (φ) is equal to or greater than a threshold value (φmin).

7. The leaning vehicle (1) according to claim 1, **characterized in that:**
when turning, one of the left front wheel (20L) and the right front wheel (20R) is an outer wheel and the other one is an inner wheel; and
the control device (70) is configured to perform an anti-tipping control of decreasing a driving force of the outer wheel and/or increasing a driving force of the inner wheel when the vehicle speed (V) is equal to or greater than a first threshold value (Vmin) and the bank angle (φ) is equal to or greater than a second threshold value (φt).

8. The leaning vehicle (1) according to claim 1, **characterized by:**
an angular speed sensor (82) configured to detect a bank angular speed (ω) of changing the bank angle (φ) of the vehicle body frame (10), wherein:
when turning, one of the left front wheel (20L) and the right front wheel (20R) is an outer wheel and the other one is an inner wheel; and
the control device (70) is configured to perform an anti-tipping control of decreasing a driving force of the outer wheel and/or increasing a driving force of the inner wheel when the vehicle speed (V) is equal to or greater than a first threshold value (Vmin) and the bank angular speed (ω) of changing the bank angle (φ) is equal to or greater than a third threshold value (ωt).

## Patentansprüche

1. Ein Neigefahrzeug (1), das umfasst:
einen Fahrzeugkörperrahmen (10) , der ein Kopfrohr (12) enthält;
ein linkes Vorderrad (20L), das links vom Kopfrohr (12) in Bezug auf die Fahrzeug-Links-Rechts-Richtung angeordnet ist;
ein rechtes Vorderrad (20R), das rechts vom Kopfrohr (12) in Bezug auf die Fahrzeug-Links-Rechts-Richtung angeordnet ist;
eine Lenkwelle (31), die von dem Kopfrohr (12) gelagert ist und zusammen mit dem linken Vorderrad (20L) und dem rechten Vorderrad (20R) nach links und rechts drehbar ist;
eine Lenkstange (30), die an der Lenkwelle (31) befestigt ist und so konfiguriert ist, dass sie von einem Fahrer betätigt werden kann;
einen Lenkermechanismus (40), der den Fahrzeugkörperrahmen (10), das linke Vorderrad (20L) und das rechte Vorderrad (20R) miteinander verbindet, so dass der Fahrzeugkörperrahmen (10), das linke Vorderrad (20L) und das rechte Vorderrad (20R) relativ zu einem Boden, auf dem das Fahrzeug steht, kippen können;
einen linken Radnabenmotor (50L), der am linken Vorderrad (20L) vorgesehen ist;
einen rechten Radnabenmotor (50R), der am rechten Vorderrad (20R) vorgesehen ist;
einen Neigungswinkelsensor (81), der so konfiguriert ist, dass er einen Neigungswinkel (φ) des Fahrzeugkörperrahmens (10) erfasst;
einen Fahrzeuggeschwindigkeitssensor (83), der so konfiguriert ist, dass er eine Fahrzeuggeschwindigkeit (V) des Fahrzeugs (1) erfasst; und
eine Steuervorrichtung (70), die mit dem Neigungswinkelsensor (81) und dem Sensor für die Fahrzeuggeschwindigkeit (83) in Verbindung steht, um den linken Radnabenmotor (50L) und den rechten Radnabenmotor (50R) auf der Grundlage des Neigungswinkels (φ) und der Fahrzeuggeschwindigkeit (V) zu steuern;
**gekennzeichnet durch**
einen Frontsensor (84), der so konfiguriert ist, dass er ein Objekt vor dem Fahrzeug erfasst,
wobei die Steuervorrichtung (70) so konfiguriert ist, dass sie, wenn der Frontsensor (84) das Objekt vor dem Fahrzeug erfasst und wenn die Fahrzeuggeschwindigkeit (V) gleich oder größer als ein vierter Schwellenwert (Vb) ist und der Neigungswinkel (φ) kleiner oder gleich einem fünften Schwellenwert (φb) ist, eine
Benachrichtigungssteuerung durchzuführen, bei der zwischen einem ersten Zustand, in dem die Antriebskraft des rechten Vorderrades (20R) größer ist als die Antriebskraft des linken Vorderrades (20L), und einem zweiten Zustand, in dem die Antriebskraft des linken Vorderrades (20L) größer ist als die Antriebskraft des rechten Vorderrades (20R), gewechselt wird.

2. Das Neigefahrzeug (1) gemäß Anspruch 1, **dadurch gekennzeichnet, dass** die Steuervorrichtung (70) so konfiguriert ist, dass sie in der Lage ist, eine Differenz zwischen einer Antriebskraft des linken Vorderrades (20L) und einer Antriebskraft des rechten Vorderrades (20R) beim Abbiegen anzupassen.

3. Das Neigefahrzeug (1) gemäß Anspruch 2, **gekennzeichnet durch**:
eine Eingabevorrichtung (85), die so konfiguriert ist, dass sie vom Fahrer bedient werden kann,
wobei die Steuervorrichtung (70) mit der Eingabevorrichtung (85) in Verbindung steht, um eine Differenz zwischen einer Antriebskraft des linken Vorderrades (20L) und
einer Antriebskraft des rechten Vorderrades (20R) beim Abbiegen auf der Grundlage eines Eingabewertes zu der Eingabevorrichtung (85) durch den Fahrer anzupassen.

4. Das Neigefahrzeug (1) gemäß Anspruch 3, **gekennzeichnet durch**:
dass beim Abbiegen eines von dem linken Vorderrad (20L) und dem rechten Vorderrad (20R) ein Außenrad und das andere ein Innenrad ist; und
die Steuervorrichtung (70) so konfiguriert ist, dass sie eine Schublenksteuerung ausführen kann, bei der die Antriebskraft des Innenrades größer ist als die Antriebskraft des Außenrades.

5. Das Neigefahrzeug (1) gemäß Anspruch 3, **dadurch gekennzeichnet, dass**:
beim Abbiegen eines von dem linken Vorderrad (20L) und dem rechten Vorderrad (20R) ein Außenrad und das andere ein Innenrad ist; und
die Steuervorrichtung (70) so konfiguriert ist, dass sie eine Zuglenksteuerung ausführen kann, bei der die Antriebskraft des Innenrades geringer ist als die Antriebskraft des Außenrades.

6. Das Neigefahrzeug (1) gemäß Anspruch 1, **dadurch gekennzeichnet, dass**:
beim Abbiegen eines von dem linken Vorderrad (20L) und dem rechten Vorderrad (20R) ein Außenrad und das andere ein Innenrad ist; und
die Steuervorrichtung (70) so konfiguriert ist, dass sie eine Steuerung zum Verringern einer Antriebskraft des Außenrades und/oder zum Erhöhen einer Antriebskraft des Innenrades ausführt, wenn der Neigungswinkel (φ) gleich oder größer als ein Schwellenwert (φmin) ist.

7. Das Neigefahrzeug (1) gemäß Anspruch 1, **dadurch gekennzeichnet, dass** beim Abbiegen eines von dem linken Vorderrad (20L) und dem rechten Vorderrad (20R) ein Außenrad und das andere ein Innenrad ist; und
die Steuervorrichtung (70) so konfiguriert ist, dass sie eine Kippschutzsteuerung zum Verringern einer Antriebskraft des Außenrades und/oder zum Erhöhen einer Antriebskraft des Innenrades durchführt, wenn die Fahrzeuggeschwindigkeit (V) gleich oder größer als ein erster Schwellenwert (Vmin) ist und der Neigungswinkel (φ) gleich oder größer als ein zweiter Schwellenwert (φt) ist.

8. Das Neigefahrzeug (1) gemäß Anspruch 1, **gekennzeichnet durch**:
einen Winkelgeschwindigkeitssensor (82), der so konfiguriert ist, dass er eine Neigungswinkelgeschwindigkeit (ω) zum Ändern des Neigungswinkels (φ) des Fahrzeugkörperrahmens (10) erfasst, wobei:
beim Abbiegen eines von dem linken Vorderrad (20L) und dem rechten Vorderrad (20R) ein Außenrad und das andere ein Innenrad ist; und
die Steuervorrichtung (70) so konfiguriert ist, dass sie eine Kippschutzsteuerung durchführt, bei der die Antriebskraft des Außenrades verringert und/oder die Antriebskraft des Innenrades erhöht wird, wenn die Fahrzeuggeschwindigkeit (V) gleich oder größer als ein erster Schwellenwert (Vmin) ist und die Neigungswinkelgeschwindigkeit (ω) zur Änderung des Neigungswinkels (φ) gleich oder größer als ein dritter Schwellenwert (ωt) ist.

## Revendications

1. Véhicule inclinable (1) comprenant :
un cadre de véhicule (10) incluant un tube de tête (12) ;
une roue avant gauche (20L) agencée à gauche par rapport au tube de tête (12) selon la direction gauche-droite du véhicule ;
une roue avant droite (20R) agencée à droite par rapport au tube de tête (12) selon la direction gauche-droite du véhicule ;
un arbre de direction (31) supporté par le tube de tête (12) et rotatif à gauche et à droite conjointement à la roue avant gauche (20L) et à la roue avant droite (20R) ;
un guidon (30) fixé à l'arbre de direction (31) et
configuré pour être actionné par un conducteur ;
un mécanisme de liaison (40) qui relie entre eux le cadre de véhicule (10), la roue avant gauche (20L) et la roue avant droite (20R), de sorte que le cadre de véhicule (10), la roue avant gauche (20L) et la roue avant droite (20R) puissent s'incliner par rapport au sol sur lequel le véhicule est placé ;
un moteur-roue gauche (50L) pourvu sur la roue avant gauche (20L) ;
un moteur-roue droit (50R) pourvu sur la roue avant droite (20R) ;
un capteur d'angle de roulis (81) configuré pour détecter un angle de roulis (φ) du cadre de véhicule (10) ;
un capteur de vitesse de véhicule (83) configuré pour détecter la vitesse (V) du véhicule (1) ; et
un dispositif de contrôle (70) connecté en communication avec le capteur d'angle de roulis (81) et avec le capteur de vitesse de véhicule (83) pour contrôler le moteur-roue gauche (50L) et le moteur-roue droit (50R) sur la base de l'angle de roulis (φ) et de la vitesse du véhicule (V) ;
**caractérisé par**
un capteur avant (84) configuré pour détecter un objet devant le véhicule,
dans lequel le dispositif de contrôle (70) est configuré pour, quand le capteur avant (84) détecte l'objet devant le véhicule et quand la vitesse du véhicule (V) est supérieure ou égale à une quatrième valeur seuil (Vb) et que l'angle de roulis (φ) est inférieur ou égal à une cinquième valeur seuil (φb), effectuer un contrôle de notification alternant entre un premier état où la force motrice de la roue avant droite (20R) est supérieure à la force motrice de la roue avant gauche (20L), et un deuxième état où la force motrice de la roue avant gauche (20L) est supérieure à la force motrice de la roue avant droite (20R).

2. Véhicule inclinable (1) selon la revendication 1, **caractérisé en ce que** le dispositif de contrôle (70) est configuré pour pouvoir régler la différence entre la force motrice de la roue avant gauche (20L) et la force motrice de la roue avant droite (20R) lors d'un virage.

3. Véhicule inclinable (1) selon la revendication 2,
**caractérisé par :**
un dispositif d'entrée (85) configuré pour être actionné par le conducteur,
dans lequel le dispositif de contrôle (70) est connecté en communication avec le dispositif d'entrée (85) pour régler la différence entre la force motrice de la roue avant gauche (20L) et la force motrice de la roue avant droite (20R) lors d'un virage sur la base d'une valeur d'entrée transmise au dispositif d'entrée (85) par le conducteur.

4. Véhicule inclinable (1) selon la revendication 3,
**caractérisé en ce que** :
lors d'un virage, une roue parmi la roue avant gauche (20L) et la roue avant droite (20R) est une roue externe et l'autre roue est une roue interne ; et
le dispositif de contrôle (70) est configuré pour être capable d'effectuer un contrôle de direction par poussée où la force motrice de la roue interne est supérieure à la force motrice de la roue externe.

5. Véhicule inclinable (1) selon la revendication 3,
**caractérisé en ce que** :
lors d'un virage, une roue parmi la roue avant gauche (20L) et la roue avant droite (20R) est une roue externe et l'autre roue est une roue interne ; et
le dispositif de contrôle (70) est configuré pour être capable d'effectuer un contrôle de direction par traction où la force motrice de la roue interne est inférieure à la force motrice de la roue externe.

6. Véhicule inclinable (1) selon la revendication 1,
**caractérisé en ce que** :
lors d'un virage, une roue parmi la roue avant gauche (20L) et la roue avant droite (20R) est une roue externe et l'autre roue est une roue interne ; et
le dispositif de contrôle (70) est configuré pour effectuer un contrôle de diminution de la force motrice de la roue externe et/ou d'augmentation de la force motrice de la roue interne quand l'angle de roulis (φ) est supérieur ou égal à une valeur seuil (φmin).

7. Véhicule inclinable (1) selon la revendication 1,
**caractérisé en ce que** :
lors d'un virage, une roue parmi la roue avant gauche (20L) et la roue avant droite (20R) est une roue externe et l'autre roue est une roue interne ; et
le dispositif de contrôle (70) est configuré pour effectuer un contrôle anti-basculement en diminuant la force motrice de la roue externe et/ou en augmentant la force motrice de la roue interne quand la vitesse du véhicule (V) est supérieure ou égale à une première valeur seuil (Vmin) et que l'angle de roulis (φ) est supérieur ou égal à une deuxième valeur seuil (φt).

8. Véhicule inclinable (1) selon la revendication 1,
**caractérisé par :**
un capteur de vitesse angulaire (82) configuré pour détecter une vitesse angulaire de roulis (ω), soit une vitesse de changement d'angle de roulis (φ), du cadre de véhicule (10), dans lequel :
lors d'un virage, une roue parmi la roue avant gauche (20L) et la roue avant droite (20R) est une roue externe et l'autre roue est une roue interne ; et
le dispositif de contrôle (70) est configuré pour effectuer un contrôle anti-basculement en diminuant la force motrice de la roue externe et/ou en augmentant la force motrice de la roue interne quand la vitesse du véhicule (V) est supérieure ou égale à une première valeur seuil (Vmin) et que la vitesse angulaire de roulis (ω), soit la vitesse de changement de l'angle de roulis (φ), est supérieure ou égale à une troisième valeur seuil (ωt).
